# EUROPÄISCHE PATENTSCHRIFT

(11) **EP 2 956 581 B1**
(45) Veröffentlichungstag und Bekanntmachung des Hinweises auf die Patenterteilung: **04.12.2019**
(21) Anmeldenummer: 14711465.6
(22) Anmeldetag: 11.03.2014
(51) Int. Cl.: C08J 5/24, H01B 1/20, D21H 17/45, D21H 17/56, H01B 3/18, H01B 3/30

(54) **CELLULOSEMATERIAL MIT IMPRÄGNIERUNG UND VERWENDUNG DIESES CELLULOSEMATERIALS**
CELLULOSE MATERIAL HAVING IMPREGNATION AND USE OF SAID CELLULOSE MATERIAL
MATIÈRE CELLULOSIQUE SOUMISE À UNE IMPRÉGNATION ET UTILISATION DE CETTE MATIÈRE CELLULOSIQUE

(30) Priorität: 28.03.2013 DE 102013205585
(43) Veröffentlichungstag der Anmeldung: 23.12.2015
(73) Patentinhaber: Siemens Aktiengesellschaft, 80333 München (DE)
(72) Erfinder: HEINRICHSDORFF, Frank, 14513 Teltow (DE); LÜTHEN, Volkmar, 14169 Berlin (DE); WINKLER, Gabriele, 13587 Berlin (DE)
(86) Internationale Anmeldenummer: PCT/EP2014/054690
(87) Internationale Veröffentlichungsnummer: WO 2014/154478

(56) Entgegenhaltungen:
- EP-A1- 1 770 803
- WO-A1-2006/015698
- DE-A1-102010 041 630
- US-A- 2 943 013
- US-A- 3 386 880
- US-A- 3 574 053
- US-B2- 6 468 396

## Beschreibung

Die Erfindung betrifft ein Cellulosematerial, welches mit einer die elektrische Leitfähigkeit des Cellulosematerials erhöhenden Imprägnierung versehen ist. Außerdem betrifft die Erfindung eine Verwendung dieses Cellulosematerials.

Aus der US 4,521,450 ist es bekannt, dass ein imprägnierfähiges Vollmaterial aus Cellulosefasern in ein wässriges Oxidationsmittel, wie z. B. einer schwach säurehaltigen Lösung aus Eisen (III)-chloridlösung, Cer(IV)-sulfat, Kaliumhexacyanoferrat(III) oder Molybdatophosphorsäure getaucht werden kann. Anschließend wird das feuchte Cellulosematerial entweder mit flüssigem oder dampfförmigem Pyrrol-Verbindungen bei Raumtemperatur so lange behandelt, bis das Pyrrol in Abhängigkeit von der Konzentration des Oxidationsmittels polymerisiert wird. Das so imprägnierte Cellulosematerial wird bei Raumtemperatur 24 Stunden getrocknet. Das Oxidationsmittel sorgt einerseits für die Polymerisation der Pyrrol-Verbindungen, außerdem für eine Erhöhung der elektrischen Leitfähigkeit. Der spezifische Widerstand p solcher imprägnierter Cellulosematerialien kann damit über die Konzentration an Pyrrolen und die Art des Oxidationsmittels beeinflusst werden. Bei der Herstellung des imprägnierten Cellulosematerials muss die toxische Wirkung des Pyrrols durch geeignete Arbeitsbedingungen und eine entsprechende Abfallbeseitigung berücksichtigt werden.

Allgemein ist die Verwendung von elektrisch leitfähigen Polymeren beispielsweise aus der DE 10 2007 018 540 A1 bekannt, um transparente, elektrisch leitfähige Schichten beispielsweise für die Beheizung von KFZ-Glas zu verwenden. Beispiele für solche elektrisch leitfähigen Polymere sind Polypyrrole, Polyanilin, Polythiophene, Polyparaphenylene, Polyparaphenylen-Vinylene und Derivate der genannten Polymere. Ein spezielles Beispiel für solche Polymere ist PEDOT, das auch unter dem Handelnamen Baytron von der Bayer AG vertrieben wird. PEDOT wird mit seinem systematischen Namen auch als Poly-(3,4-ethylen-dioxythiophen) bezeichnet.

Gemäß der EP 1 770 803 A1 ist ein Separator für die in einer Alkalibatterie zum Einsatz kommenden Elektrolyte vorgesehen. Dieser soll interner Kurzschlüsse verhindern. Der Separator kann aus Cellulosefasern bestehen, deren Zusammenhalt durch Polymere verbessert werden kann. Unter anderem ist vorgesehen, Polyethylenimin als Zwischenverbindungssubstanz mit einem vergleichsweise geringen Anteil von einem MasseProzent zuzugeben.

Außerdem wird Polyethylenimin in der Papier Erzeugung verwendet, um die erzeugten Papiere zu Imprägnierung. Dies lässt sich beispielsweise der US 3574053 A, aus der US 2943013 A, der WO 2006/015698 33868 A1, der US 3386880 A oder US 6468396 B2 entnehmen.

Die Aufgabe der Erfindung besteht darin, ein Cellulosematerial mit einer die elektrische Leitfähigkeit dieses Cellulosematerials erhöhenden Imprägnierung anzugeben, das eine Verwendung dieses Cellulosematerials im Öl eines Transformators optimal unterstützt.

Diese Aufgabe wird erfindungsgemäß durch das eingangs genannte Cellulosematerial dadurch gelöst, dass die Imprägnierung aus Polyethylenimin besteht. Als Cellulosematerial können Materialien aller bekannten Formen verwendet werden. Cellulosematerialien werden vorzugsweise als Papier, Pappe oder Pressspan hergestellt. Diese Cellulosematerialien können Halbzeuge für technische Bauteile sein, welche vorteilhaft in der imprägnierten Variante Verwendung finden.

Die Verwendung negativ geladener und positiv geladener Ionomere ermöglicht vorteilhaft eine besonders einfache Herstellung des Cellulosematerials. Die Ionomere können einfach in Wasser gelöst werden und somit dem Prozess der Herstellung des Cellulosematerials, der ebenfalls wasserbasiert ist, zugeführt werden. Durch Vernetzung der Ionomere im Anschluss an die Herstellung des Cellulosematerials kann der spezifische Widerstand des Cellulosematerials gesenkt werden. Dabei polymerisieren die Ionomere und bilden in dem Cellulosematerial ein elektrisch leitfähiges Netzwerk aus Polyethylenimin, welches für die Verminderung des spezifischen Widerstandes verantwortlich ist. Vorteilhaft kann der Prozess der Herstellung mit vergleichsweise ungiftigen Substanzen durchgeführt werden, so dass im Vergleich zur Verwendung von Pyrrolen wesentlich geringere Anforderungen an die Prozesssicherheit gestellt werden müssen. Außerdem fallen keine giftigen Abfälle an, deren Entsorgung einen zusätzlichen Aufwand bedeuten würde.

Gemäß der Erfindung ist vorgesehen, dass der spezifische Widerstand ρₚ des imprägnierten Cellulosematerials bei 10¹² Ωm liegt. Dies hat beispielsweise bei der Verwendung des Cellulosematerials im Öl eines Transformators den Vorteil, dass der spezifische Widerstand des Cellulosematerials größenordnungsmäßig mit dem des Öls vergleichbar ist, weswegen sich der dielektrische Stress im Betrieb gleichmäßig auf das Transformatoröl und das Isolationsmaterial verteilt. Daher ist erfindungsgemäß eine Lösung der Aufgabe dadurch gegeben, dass das Cellulosematerial mit einer die elektrische Leitfähigkeit des Cellulosematerials erhöhenden Imprägnierung, die aus Polyethylenimin besteht, als Isolationsmaterial für einen Transformator verwendet wird.

Selbstverständlich kann das Isolationsmaterial nicht nur für einen Transformator, sondern auch für andere elektrische Komponenten zum Einsatz kommen. Hierbei lassen sich beliebige Anlagenkomponenten der Hochspannungstechnik bei Gleichstrombeanspruchung zuverlässig elektrisch isolieren. Das erfindungsgemäße Isolationsmaterial kann dabei als Verschalung oder auch als Beschichtung der Anlagenkomponenten verwendet werden. Eine Beschichtung kann dahingehend erfolgen, dass das Cellulosematerial beispielsweise mattenförmig auf die Komponente aufgelegt wird und anschließend mit dem Polyethylenimin imprägniert wird. Durch Erwärmen der imprägnierten Cellulosebahn erfolgt dann eine Polymerisierung der verwendeten Ionenmere zu Polyethylenimin. Letzter Absatz herleiten. Daher haben wir die Aufgabenstellung in der Beschreibung auf Seite 2 auch entsprechend angepasst.

Gemäß einer vorteilhaften Ausgestaltung der Erfindung ist vorgesehen, dass das Cellulosematerial auch mit Partikeln aus Titanoxid imprägniert ist. Diese Zugabe von Partikeln aus Titanoxid, insbesondere Titandioxid, verbessert vorteilhaft die Alterungsbeständigkeit der Isolationsmaterialien. Gemäß einer besonderen Ausgestaltung der Erfindung ist vorgesehen, dass das Polyethylenimin an die Partikel aus Titanoxid angelagert ist. Hierdurch wird vorteilhaft eine zuverlässige Fixierung dieser Partikel in dem aus den Cellulosefasern bestehenden Verband des Cellulosematerials erreicht. Außerdem lässt sich vorteilhaft auch die elektrische Leitfähigkeit des Cellulosematerials weiter steigern.
Das Cellulosematerial ist vorzugsweise flächig ausgebildet und über die gesamte Dicke mit einer zumindest im Wesentlichen gleichbleibenden Konzentration des zur Imprägnierung vorgesehenen Polymers versehen. Hierdurch kann erreicht werden, dass der spezifische Widerstand insbesondere bei der Verwendung des Cellulosematerials als elektrische Isolierung in Öl über den gesamten Querschnitt der Isolierung einen gleichmäßigen Spannungsabfall erzeugt (zu den in der elektrischen Isolierung in Transformatoren vorliegenden Verhältnissen im Folgenden noch mehr).

Das erfindungsgemäße Cellulosematerial kann durch ein Verfahren hergestellt werden, bei dem eine Imprägnierung mit organischen Stoffen in folgenden Schritten erfolgt. Zunächst wird ein wässriger Elektrolyt aus einem positiv geladenen Ionomer und einem negativ geladenen Ionomer hergestellt.

Diesem Elektrolyt werden Cellulosefasern beigemischt. Hierdurch entsteht eine Pulpe, der Ausgangsstoff für eine Herstellung von Papier, welches aus der Pulpe geschöpft wird. Alternativ können die Cellulosefasern auch mit dem Elektrolyt getränkt werden. Dieses setzt voraus, dass bereits ein Cellulosefasern enthaltendes Rohmaterial vorhanden ist, welches vorzugsweise trocken vorliegt oder in entwässertem Zustand vorliegt, so dass der Elektrolyt diesem Zwischenprodukt zugeführt werden kann. Im nächsten Schritt wird das Wasser des Elektrolyten zumindest so weit entfernt, dass das Cellulosematerial entsteht. Hiermit ist gemeint, dass das Cellulosematerial bereits einen handhabbaren Verband bildet, der einer weiteren Bearbeitung zugrunde gelegt werden kann. Dies erfolgt durch Entwässerung beispielsweise, wie aus der Papierherstellung bekannt, durch Abtropfen der Pulpe auf einem Sieb. Zum Schluss werden die Ionomere zu Polyethylenimin vernetzt. Hierzu ist vorzugsweise eine Wärmebehandlung oberhalb der Vernetzungstemperatur der betreffenden Ionomere erforderlich. Es bildet sich hierdurch das oben bereits erwähnte Netzwerk von Polymeren, welches elektrisch leitfähig ist, und daher den spezifischen Widerstand des Cellulosematerials herabsetzt.
Um Cellulosematerialien größerer Dicke herstellen zu können, kann vorteilhaft vorgesehen werden, dass das Cellulosematerial durch Schichten mehrerer vorher imprägnierter Lagen hergestellt wird. Hierdurch kann sichergestellt werden, dass die einzelnen Lagen aus Cellulosematerial so dünn sind, dass eine Imprägnierung zumindest weitgehend über die gesamte Dicke der Lage ermöglicht wird. Dies ist auch dann möglich, wenn die hergestellten Lagen in der oben beschriebenen Weise durch das Elektrolyt getränkt werden und nicht die einzelnen Cellulosefasern imprägniert werden. Um anschließend zu einem Cellulosematerial einer größeren Dicke zu kommen, wird dieses nach der Behandlung mit dem Elektrolyt zu einem mehrlagigen Cellulosematerial geschichtet. Dabei kann eine Vernetzung und/oder Trocknung bereits vor dem Schichten der Lagen begonnen werden. Vorteilhaft ist es aber, einen Abschluss der Vernetzung erst nach dem Schichten der Lagen vorzunehmen, da dann auch eine Vernetzung der Ionomere unterschiedlicher Lagen untereinander erfolgen kann, so dass das bereits beschriebene Netz von Polymeren übergreifend über alle Lagen entsteht. Hierdurch lässt sich der spezifische Widerstand auch eines mehrlagigen Cellulosematerials vorteilhaft mit vergleichsweise wenig Polymermaterial in vergleichsweise starkem Maße erhöhen.

Das erfindungsgemäße Cellulosematerial kann gemäß einem Ausführungsbeispiel unter Laborbedingungen hergestellt werden, wobei der Verfahrensablauf im Folgenden näher erläutert werden soll. Verwendet werden kann ein kommerziell erhältlicher Pressspan (im Folgenden Cellulose Lieferzustand genannt). Dieser wird zunächst in 90x50 mm große Stücke mit einer Dicke von 3,1 mm zerschnitten. Diese werden in destilliertem Wasser bei Temperaturen zwischen 95 und 99° C unter Rühren mittels einem Magnetrührer erhitzt, bis sich einzelne Lagen im Randbereich des Pressspans zu lösen beginen. In diesem Stadium ist der Pressspan dann vollständig mit Wasser vollgesaugt. Der nasse Pressspan wird aus dem Wasser genommen und in seine einzelnen Lagen getrennt. Die separierten Lagen werden erneut in destilliertem Wasser bei 95 - 99° C unter Rühren erhitzt, bis sich weitere einzelne Blätter lösen. Die einzelnen Lagen und Blätter werden dem Wasser erneut entnommen und bis zur dünnsten trennbaren Schicht vereinzelt. Die sehr dünnen, mechanisch nicht mehr trennbaren Schichten werden zuletzt unter Rühren in destilliertem Wasser (Temperatur s. o.) so lange erhitzt, bis einzelne Cellulosefaser vorliegen.

In einem nächsten Schritt erfolgt die Filtration der so erhaltenen Pulpe zu dünnen Gewebelagen. Die einzelnen Cellulosefäden werden abfiltriert, und zwar mit Hilfe eines Büchnertrichters unter Anlegen eines Unterdrucks. Als Filterpapier kann ein Schwarzbandfilter der Fa. Schleicher & Schöll Nr. 589 oder 595 verwendet werden. Die so erhaltenen Gewebelagen enhalten noch ein Vielfaches an Wasser bezogen auf das ursprüngliche Gewicht des eingesetzten Pressspans.

Die Gewebelagen lassen sich leicht vom Schwarzbandfilter trennen.

In einem nächsten Schritt werden die einzelnen Gewebelagen in einer wässrigen Lösung mit unter Rühren mit einem Magnetrührer bei Raumtemperaturen in einzelne Cellulosefäden aufgelöst. Diese werden während des Rührvorgangs mit Ionomeren des Polyethylenimins imprägniert. Nach einer Stunde Rühren werden die imprägnierten Cellulosefäden nach dem bereits beschriebenen Prinzip unter Unterdruck auf einem Schwarzbandfilter abfiltriert. Die entstandene Gewebelage lässt sich wieder leicht von dem Schwarzbandfilter ablösen.

In einem nächsten Schritt sollten die imprägnierten Gewebelagen durch Walzen geglättet werden. Hierzu werden die einzelnen Gewebslagen übereinandergelegt und mit einem flachen Gegenstand leicht aneinandergedrückt. Anschließend wird der Stapel aus imprägnierten Gewebelagen mehrmals mit steigendem Druck durch eine Walze komprimiert. Dabei werden die einzelnen Gewebelagen zu einem imprägnierten Faserfilz verdichtet, wobei überschüssige Flüssigkeit herausgedrückt wird.

In einem nächsten Schritt sollten die Ionomere vernetzt werden und eine Trocknung des Cellulosematerials erfolgen. Hierzu wird das verbliebene Wasser durch Verdampfen in einem Trockenschrank zwischen Stahlplatten unter Druck entfernt. Die Temperatur zum Trocknen wird so gewählt, dass zunächst eine Vernetzung des Polyethylenimins stattfindet. Dazu wird der imprägnierte Faserfilz zwischen Stahlplatten gelegt. Die Stahlplatten werden beispielsweise mit einem Druck von 2,4 KPa zusammengedrückt. Die Auflageflächen, mit denen der imprägnierte Faserfilz in Berührung kam, können mit Teflon beschichtet sein, um ein Anbacken der noch nicht polymerisierten Ausgangsstoffe an die Metallplatten zu verhindern. Sobald die Vernetzung abgeschlossen ist, werden zum Endtrocknen Auflageflächen aus Metall verwendet. Die Endtrocknung erfolgt so lange, bis sich das Gewicht und die Dicke des Cellulosematerials nicht mehr verändert.

Durch Imprägnierung des Cellulosematerials mit Polyethylenimin können die elektrischen Eigenschaften kontrolliert eingestellt werden, so dass der spezifische Widerstand des Cellulosematerials verändert werden kann. Der apparative Aufbau kann wegen der toxischen Unbedenklichkeit der verwendeten Polymere im Vergleich zur Verwendung von Pyrrolverbindungen verhältnismäßig gering gehalten werden.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschieden zwischen den einzelnen Figuren ergeben. Es zeigen:
- Figur 1: Cellulosefasern, die mit einem Netzwerk von Polymeren (alternativ auch mit Partikeln aus Titanoxid) umgeben sind, gemäß einem Ausführungsbeispiel des erfindungsgemäßen Cellulosematerials in dreidimensionaler Ansicht,
- Figur 2: schematisch den Schnitt durch ein mehrlagiges Cellulosematerial gemäß einem anderen Ausführungsbeispiel des erfindungsgemäßen Cellulosematerials,
- Figur 3: ein Ausführungsbeispiel des erfindungsgemäßen Cellulosematerials im Schnitt, wie dieses als Isolation bei einem Transformator zum Einsatz kommt, wobei die anliegenden Spannungen am Isolationsmaterial schematisch dargestellt sind und
- Figur 4: ein Ausführungsbeispiel des erfindungsgemäßen Verfahrens, dargestellt schematisch durch eine Fertigungsanlage als Seitenansicht.

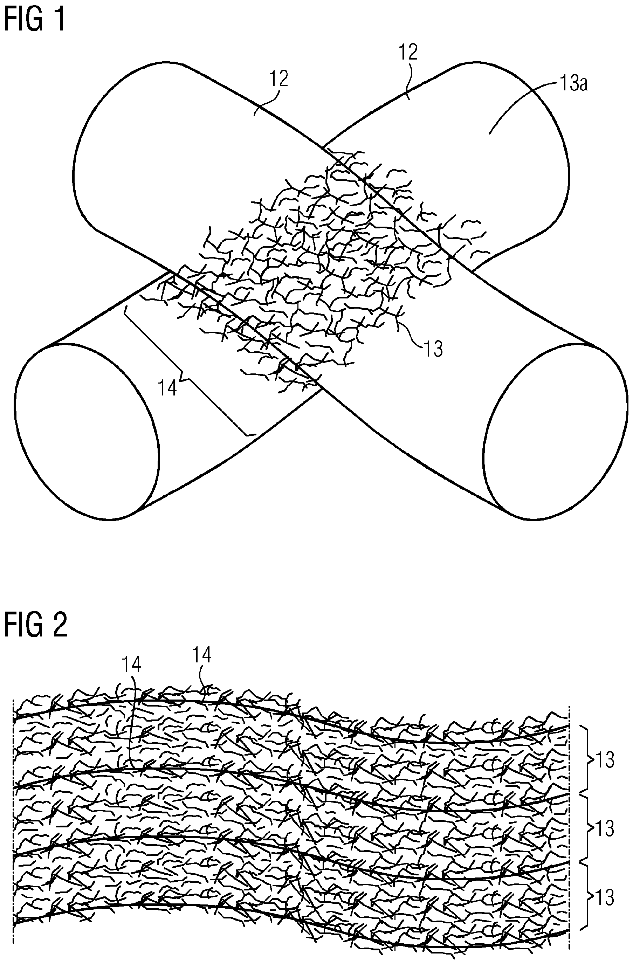

Gemäß Figur 1 ist ein Cellulosematerial durch zwei Cellulosefasern 12 repräsentiert, auf denen Polyethylenimin 13 ein ausschnitthaft dargestelltes Netzwerk 14 ausbildet. Dieses Netzwerk 14 wird erhalten, indem eine Polymerisierung des Polymers erst nach Imprägnierung der Cellulosefasern 12 und Herstellung des Cellulosematerials durchgeführt wird. Das Netzwerk 14 durchdringt das Cellulosematerial, so dass eine elektrisch leitende Verbindung des elektrisch leitenden Polymers gewährleistet ist. Daher verringert das Netzwerk 14 des Polyethylenimin 13 den spezifischen Widerstand des Cellulosematerials in der oben beschriebenen Weise.

Weiterhin sind in Figur 1 schematisch Partikel 13a aus Titanoxid dargestellt, welche in dem durch die Cellulosefasern 12 gebildeten Gewebe gehalten werden. Durch die Cellulosefasern 12 ergeben sich Zwischenräume, in denen die Partikel 13a fixiert werden können. Einen zusätzlichen Fixierungseffekt bewirken außerdem das Polyethylenimin 13, welches auch die Oberfläche der Partikel 13a bedeckt und so im Umfeld dieser Partikel 13a einen mechanisch stabilisierenden Effekt bewirkt.

In Figur 2 ist zu erkennen, dass ein Cellulosematerial auch aus mehreren Lagen 13 aufgebaut sein kann. In diesem Fall handelt es sich um Lagen, deren Imprägnierung erst nach ihrer Herstellung erfolgt ist. Daher ist zu erkennen, dass sich das Netzwerk 14 aus den Polymeren jeweils nur in der Nähe der Oberfläche der Lagen 13 befindet, weil das Elektrolyt, mit dem die Lagen 13 getränkt wurden, nur in die Oberfläche der einzelnen Lagen eingedrungen war. Allerdings ist eine Polymerisierung des Polymers erst erfolgt, als die Lagen 13 bereits zum Cellulosematerial zusammengefügt waren, so dass die sich ausbildenden Netzwerke über die Lagen hinweg sich erstrecken und so einerseits zu einem besseren Zusammenhalt des Cellulosematerials und andererseits zu einer Verringerung des spezifischen Widerstandes des Cellulosematerials beitragen.

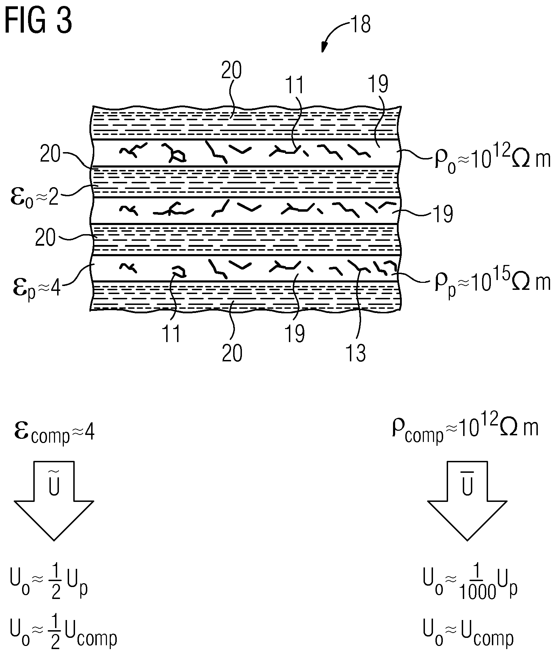

Ein elektrisches Isolationsmaterial 18 gemäß Figur 3 besteht aus mehreren Lagen aus Papier 19 als Cellulosematerial, zwischen denen Ölschichten 20 liegen. Auch die Papiere 19 sind mit Öl getränkt, was in Figur 3 nicht näher dargestellt ist. Dafür ist in Figur 3 innerhalb der Papiere die Imprägnierung mit Polyethylenimin 13 zu erkennen. Die gemäß Figur 3 dargestellte Isolierung umgibt beispielsweise in einem Transformator die dort zum Einsatz kommenden Wicklungen, die nach außen und zueinander elektrisch isoliert werden müssen.

Die elektrische Isolation eines Transformators muss im Betriebsfall bei Anliegen einer Wechselspannung elektrische Durchbrüche verhindern. In diesem Fall ist das Isolationsverhalten der Isolierung von der Permittivität der Komponenten der Isolierung abhängig. Für Öl liegt die Permittivitätszahl εₒ ungefähr bei 2, für das Papier εₚ bei 4. Bei einer Beanspruchung der Isolation mit einer Wechselspannung ergibt sich daher für die Belastung der einzelnen Isolationskomponenten, dass die am Öl anliegende Spannung Uₒ ungefähr doppelt so hoch ist, wie die am Papier anliegende Spannung Uₚ. Wird der erfindungsgemäße Nanokomposit verwendet, bei dem das Papier 19 in der in Figur 3 dargestellten Weise mit Polyethylenimin imprägniert ist, so beeinflusst das Polyethylenimin die Spannungsverteilung in der erfindungsgemäßen Isolation nicht, da die Permittivitätszahl des Polyethylenimin ebenfalls ungefähr in dieser Größenordnung liegt und daher die Permittivität ε_{comp} des imprägnierten Papiers auch bei ungefähr 4 liegt. Damit ist auch bei der erfindungsgemäßen Isolation die am Öl angreifende Spannung Uₒ ungefähr doppelt so groß wie die am Nanokomposit (Papier) anliegende Spannung U_{comp}.

Treten Störfälle am Transformator auf, so kann auch die Durchschlagfestigkeit der Isolation bei Anliegen von Gleichspannungen von Bedeutung sein. Die Verteilung der anliegenden Spannung auf die einzelnen Isolationsbestandteile ist dann allerdings nicht mehr von der Permittivität abhängig, sondern vom spezifischen Widerstand der einzelnen Komponenten. Der spezifische Widerstand ρₒ von Öl liegt bei 10¹² Ωm. Demgegenüber ist ρₚ von Papier um drei Größenordnungen höher und liegt bei 10¹⁵ Qm. Dies bewirkt, dass bei Anliegen einer Gleichspannung die Spannung am Öl Uₒ das Tausendfache der Spannung am Papier Uₚ beträgt. Dieses Ungleichgewicht birgt die Gefahr, dass es bei einer Beaufschlagung der Isolation mit einer Gleichspannung zu Durchschlägen im Öl kommt und die elektrische Isolation versagt.

Das erfindungsgemäß in das Papier 19 eingebrachten Netzwerk aus Polyethylenimin wird durch Wahl der Konzentration an Polyethylenimin (zwischen 0,1 und 1000 Qcm) so eingestellt, dass der spezifische Widerstand des Papiers ρₚ herabgesetzt wird. Hierdurch lässt sich für den erfindungsgemäßen Komposit eine spezifische Leitfähigkeit ρ_{comp} einstellen, der an den spezifischen Widerstand ρₒ angenähert ist und im Idealfall diesem ungefähr entspricht. Bei einem spezifischen Widerstand ρ_{comp} von ungefähr 10¹² Ωm liegt die am Öl anliegende Spannung Uₒ im Bereich der am Komposit anliegenden Spannung U_{comp}, so dass sich ein ausgeglichenes Spannungsprofil in der Isolation einstellt. Hierdurch wird vorteilhaft die Durchschlagfestigkeit der Isolation verbessert, da sich die Belastung des Öls spürbar verringert.

Diese Überlegungen können analog auch für andere mit Gleichstrom betriebene Einrichtungen bzw. deren Komponenten angestellt werden. Der geforderte spezifische Widerstand lässt sich durch die Dichte des durch das Polyethylenimin gebildeten Netzwerks einstellen. Hiermit können insbesondere die elektrischen Eigenschaften von elektrischen Isolationskomponenten an den jeweiligen Anwendungsfall angepasst werden.

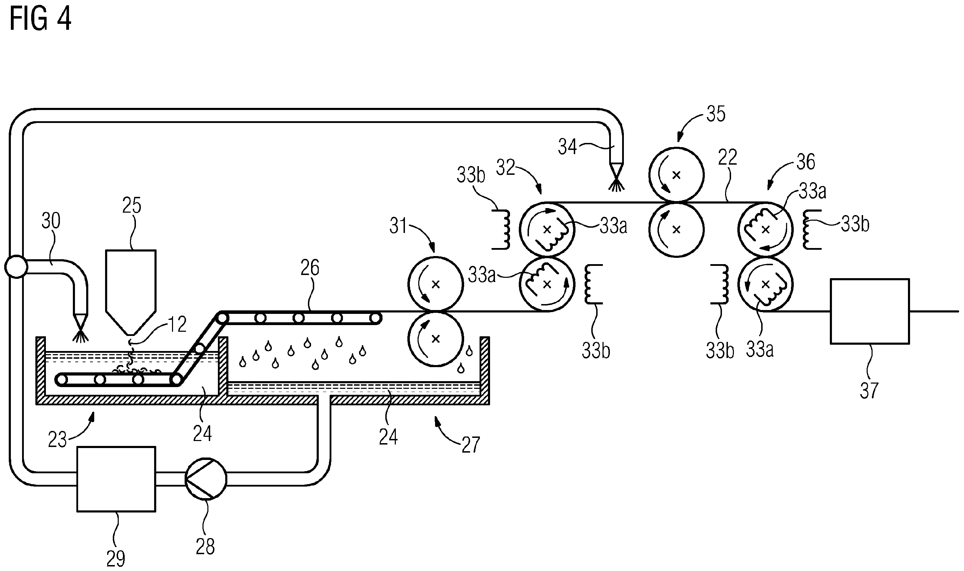

In Figur 4 ist eine Fertigungsanlage für ein Cellulosematerial in Form einer Papierbahn 22 gezeigt, welche sich zur Durchführung eines Ausführungsbeispiels des erfindungsgemäßen Verfahrens eignet. Diese Anlage weist einen ersten Behälter 23 für einen Elektrolyt 24 auf, wobei in dem Elektrolyt Ionomere von Polyethylenimin enthalten sind. Außerdem werden aus einem Vorratsbehälter 25 Cellulosefasern 12 oder eines Gemisches aus Cellulosefasern 12 und nicht dargestellten Nanopartikeln aus Titanoxid in den Elektrolyten 24 eingerieselt. Auf diese Weise wird in an sich bekannter Art und daher nicht näher dargestellt eine Pulpe in dem Elektrolyt 24 hergestellt, welche auf einem siebförmigen Laufband 26 abgeschieden wird. Dieses Laufband führt in einen zweiten Behälter 27, wo der Elektrolyt 24 abtropfen kann, wodurch aus den Cellulosefasern eine bereits teilweise entwässerte Matte entsteht. Der Elektrolyt wird über eine Pumpe 28 einer Wiederaufbereitungsanlage 29 zugeführt, wo die erforderliche Konzentration an den Ionomeren wieder eingestellt wird. Der aufbereitete Elektrolyt kann über einen Zufluss 30 dem ersten Behälter 23 zugeführt werden.

Aus dem gewonnenen Cellulosematerial wird im weiteren Verlauf des Verfahrens die Papierbahn 22 hergestellt. Zunächst erfolgt eine weitere Entwässerung über ein Walzenpaar 31, wobei auch der bei diesem Entwässerungsschritt frei werdende Elektrolyt in dem Behälter 27 aufgefangen wird. Anschließend passiert die Papierbahn 22 ein nächstes Walzenpaar 32, wobei durch die S-förmige Führung der Papierbahn um das Walzenpaar ein vergleichsweise großer Umschlingungswinkel erreicht wird. Das Walzenpaar wird nämlich über die angedeuteten Heizeinrichtungen 33a beheizt, so dass ein Wärmeübergang auf die Papierbahn möglich ist. Hierzu können auch zusätzliche Heizeinrichtungen 33b unterstützend zum Einsatz kommen. Über die Heizeinrichtungen 33a, 33b wird die Papierbahn auf Polymerisationstemperatur gebracht, so dass die Ionomere zu Polyethylenimin polymerisieren und sich das bereits vorstehend beschriebene Netzwerk bildet. Bei dieser Behandlung erfolgt auch eine weitere Entwässerung.

Nach einem Polymerisieren der Ionomere kann über eine weitere Zuführvorrichtung 34 nochmals Elektrolyt auf die Papierbahn aufgebracht werden, wobei die inzwischen weitgehend entwässerte Papierbahn saugfähig genug ist, damit die Cellulosefasern mit dem Elektrolyt getränkt werden können. Anschließend durchläuft die Papierbahn 22 ein weiteres Walzenpaar 35 und wird hierdurch wieder entwässert. Eine weitere Entwässerung sowie Polymerisierung der zusätzlich eingebrachten Ionomere wird über ein Walzenpaar 36 erreicht, wobei dieses in der zum Walzenpaar 32 beschriebenen Weise über Heizeinrichtungen 33a, 33b beheizbar ist.

Sobald die Papierbahn 22 das Walzenpaar 36 verlässt, ist die Papierbahn weitgehend entwässert. Allerdings enthält diese noch einen Restgehalt an Wasser und wird deswegen einer Trocknungseinrichtung 37 zugeführt und kann in dieser Trocknungseinrichtung nach Bedarf getrocknet werden.

Hierzu ist zu bemerken, dass der spezifische Widerstand p der hergestellten Papierbahn 22 nicht nur vom Gehalt an Polyethylenimin sondern auch vom Restwassergehalt abhängig ist. Soll die Papierbahn beispielsweise als elektrische Isolation in einem Transformator verwendet werden, muss diese mit Öl getränkt werden und darf deswegen möglichst kein Wasser mehr enthalten. Dies ist durch die anschließende Trocknung in der Trockeneinrichtung 37 sicherzustellen. Die Trocknungseinrichtung 37 kann beispielsweise als Ofen ausgeführt sein.

## Patentansprüche

1. Cellulosematerial (19, 22) aus Cellulosefasern, welches mit einer die elektrische Leitfähigkeit des Cellulosematerials (19, 22) erhöhenden Imprägnierung versehen ist, wobei die Imprägnierung aus einem elektrisch leitfähigen Netzwerk aus Polyethylenimin (13) besteht,
**dadurch gekennzeichnet,**
**dass** der spezifische Widerstand ρₚ des imprägnierten Cellulosematerials (19, 22) bei 10¹² Ωm liegt.

2. Cellulosematerial (19, 22) nach Anspruch 1,
**dadurch gekennzeichnet,**
**dass** das Cellulosematerial auch mit Partikeln (13a) aus Titanoxid imprägniert ist.

3. Cellulosematerial (19, 22) nach Anspruch 2,
**dadurch gekennzeichnet,**
**dass** das Polyethylenimin an die Partikel aus Titanoxid angelagert ist.

4. Cellulosematerial (19, 22) nach einem der vorangehenden Ansprüche,
**dadurch gekennzeichnet,**
**dass** dieses flächig ausgebildet ist und über die gesamte Dicke eine zumindest im Wesentlichen gleichbleibende Konzentration des zur Imprägnierung vorgesehenen Polymers (13) aufweist.

5. Verwendung eines Cellulosematerials (19, 22) aus Cellulosefasern mit einer die elektrische Leitfähigkeit des Cellulosematerials (19, 22) erhöhenden Imprägnierung, die aus einem elektrisch leitfähigen Netzwerk aus Polyethylenimin besteht als Isolationsmaterial (18) für einen Transformator, wobei der spezifische Widerstand ρₚ des imprägnierten Cellulosematerials (19, 22) bei 10¹² Ωm liegt.

## Claims

1. Cellulose material (19, 22) made from cellulose fibers and provided with an impregnation that increases the electrical conductivity of the cellulose material (19, 22), wherein the impregnation consists of an electrically conductive network of polyethyleneimine (13),
**characterized in that**
the specific resistivity ρₚ of the impregnated cellulose material (19, 22) is 10¹² Ωm.

2. Cellulose material (19, 22) according to Claim 1,
**characterized in that**
the cellulose material has also been impregnated with particles (13a) of titanium oxide.

3. Cellulose material (19, 22) according to Claim 2,
**characterized in that**
the polyethyleneimine is appended to the particles of titanium oxide.

4. Cellulose material (19, 22) according to any of the preceding claims,
**characterized in that**
it is flat and has an at least essentially constant concentration of the polymer (13) intended for impregnation over the entire thickness.

5. Use of a cellulose material (19, 22) made from cellulose fibers and having an impregnation which increases the electrical conductivity of the cellulose material (19, 22) and consists of an electrically conductive network of polyethyleneimine as insulation material (18) for a transformer, wherein the specific resistivity ρₚ of the impregnated cellulose material (19, 22) is 10¹² Ωm.

## Revendications

1. Matière (19, 22) cellulosique en fibres cellulosiques, qui est pourvue d'une imprégnation augmentant la conductivité électrique de la matière (19, 22) cellulosique, l'imprégnation étant constituée d'un réseau conducteur de l'électricité en polyéthylèneimine (13),
**caractérisée**
**en ce que** la résistivité ρₚ de la matière (19, 22) cellulosique imprégnée est de 10¹² Ωm.

2. Matière (19, 22) cellulosique suivant la revendication 1,
**caractérisée**
**en ce que** la matière cellulosique est imprégnée également de particules (13a) d'oxyde de titane.

3. Matière (19, 22) cellulosique suivant la revendication 2,
**caractérisée**
**en ce que** la polyéthylèneimine est fixée sur les particules d'oxyde de titane.

4. Matière (19, 22) cellulosique suivant l'une des revendications précédentes,
**caractérisée**
**en ce qu'**elle est constituée en nappe et a, sur toute l'épaisseur, une concentration au moins sensiblement constante du polymère (13) prévu pour l'imprégnation.

5. Utilisation d'une matière (19, 22) cellulosique en fibres cellulosiques, ayant une imprégnation augmentant la conductivité électrique de la matière (19, 22) cellulosique, qui est constituée d'un réseau conducteur de l'électricité, en polyéthylèneimine, comme matière (18) isolante, pour un transformateur, la résistivité ρₚ de la matière (19, 22) cellulosique imprégnée étant de 10¹² Ωm.
